# FASCICULE DE BREVET EUROPEEN

(11) **EP 1 592 606 B1**
(45) Date de publication et mention de la délivrance du brevet: **28.06.2006**
(21) Numéro de dépôt: 04707536.1
(22) Date de dépôt: 03.02.2004
(51) Int. Cl.: B62D 33/06

(54) **CABINE A POSTE DE CONDUITE POUR VEHICULE A MOTEUR**
FAHRERHAUS UND FÜHRERSITZ EINES KRAFTFAHRZEUGES
DRIVERS CABIN FOR A MOTOR VEHICLE

(30) Priorité: 11.02.2003 FR 0301589
(43) Date de publication de la demande: 09.11.2005
(73) Titulaire: RENAULT TRUCKS, 69800 St Priest (FR)
(72) Inventeur: RIBOUCHON, Serge, F-38790 Saint Georges d'Esperanche (FR)
(74) Mandataire: Vuillermoz, Bruno
(86) Numéro de dépôt international: PCT/EP2004/050076
(87) Numéro de publication internationale: WO 2004/071809

(56) Documents cités:
- EP-A- 0 545 877
- EP-A- 1 110 805
- WO-A-99/19708
- US-B1- 6 450 530
- MANARY M.A., REED M.P. & AL.: "ATD Positioning based on driver posture and position" SAE TECHNICAL PAPERS, [Online] 4 novembre 1998 (1998-11-04), XP002259530 ISSN: 0148-7191

## Description

La présente invention concerne une cabine intégrant un poste de conduite. Elle vise également un véhicule à moteur comprenant une telle cabine. L'invention se rapporte à une nouvelle position de conduite et son intégration dans l'architecture particulière des véhicules industriels.

A travers les différents continents, Japon, Etats-Unis, Europe, les véhicules industriels se répartissent en deux grandes familles. Cette distinction s'explique par des différences réglementaires. En effet, en Europe et au Japon, les longueurs de convoi, c'est-à-dire de l'ensemble formé par le véhicule tracteur et la remorque sont réglementées. De plus en Europe, la longueur du chargement est réglementée.

Dans ce cas, la longueur de la cabine d'un camion circulant en Europe ne peut pas excéder une valeur de 2,3 m pour des usages routiers. Pour optimiser le volume habitable de la cabine et la longueur de l'ensemble tracteur avec remorque, il est donc impératif de positionner la cabine au-dessus des organes mécaniques, du moteur, du groupe de refroidissement et des roues avants, c'est-à-dire vers l'avant du véhicule avec une architecture de type « cabine avancée ».

L'avantage de la hauteur du poste de conduite est que la visibilité de la route est favorisée. L'inconvénient d'une telle architecture est que la hauteur à laquelle se situe la cabine devient importante. Dans ce cas, l'accès au poste de conduite s'avère contraignant.

Aux Etats-Unis, la réglementation est différente. Seules les longueurs de remorque sont réglementées, et non pas la longueur du tracteur. Ceci donne beaucoup plus de liberté aux constructeurs pour positionner la cabine sur le châssis du véhicule tracteur. La réglementation américaine autorise tout type d'architecture cabine.

Toutefois dans la quasi totalité des cas, la cabine est positionnée dans le prolongement du moteur et dans une position beaucoup plus reculée, appelle « cabine arrière moteur». Ceci permet de diminuer la hauteur du plancher. La cabine est généralement plus basse de 200 mm à 300 mm par rapport aux cabines de camions circulant en Europe.

L'accessibilité au poste de conduite se trouve nettement améliorée par rapport à celle d'un camion circulant en Europe. En outre, les pièces d'habillage des éléments mécaniques (capot moteur, ...) sont de très grande taille et peuvent être stylisées différemment, permettant ainsi une forte différenciation entre les produits d'une même marque. En revanche, la visibilité est moins bonne à cause du volume occupé par le capot moteur et de sa projection à l'avant du véhicule.

La construction des véhicules actuels se résume à l'élaboration d'une réponse correspondant au meilleur compromis entre des contraintes de visibilité vers l'avant, de hauteur de plancher pour la cabine et de position assise de conduite. Mais il est également le résultat de compromis techniques que sont la hauteur des organes mécaniques, du moteur et du groupe de refroidissement et la hauteur intérieure de la planche de bord.

### Etat de la technique

Pour obtenir à la fois une bonne visibilité rapprochée et une accessibilité, telles que décrites ci-dessus, il est proposé dans tous les véhicules industriels, un poste de conduite avec une position de conduite standard. Elle se caractérise par de grands angles de visibilité vers l'avant du bas vers le haut et des hauteurs importantes pour l'assise du siège, définies par rapport au plancher de la cabine.

La visibilité vers l'avant est particulièrement appréciée par les conducteurs, car ceux ci cherchent constamment à anticiper les réactions des autres usagers. En effet, les distances de freinage étant plus importantes sur les véhicules industriels, il est primordial pour la sécurité des usagers d'être à même de réagir rapidement.

Les hauteurs des sièges des postes de conduite des véhicules industriels sont généralement réglables et comprises entre 400 mm et 550 nun par rapport au plancher de la cabine. Ceci permet aux conducteurs européens de bénéficier d'une visibilité frontale comprise entre 20° et 30° et aux conducteurs américains entre 12° et 20°.

Toutefois, cette hauteur est trop importante pour disposer d'un confort postural optimisé. En outre, la position de l'assise du siège n'est pas optimisée pour les conducteurs effectuant de longs trajets, la fatigue étant source de stress. Par ailleurs, les sièges traditionnels génèrent des douleurs dorsales. En effet, dans les sièges traditionnels, les positions de conduite sont très droites, occasionnant des douleurs lombaires dues au fléchissement progressif de la courbure lombaire. Les pressions d'appui sur l'assise sont également plus fortes que dans un siège de véhicule léger, tel que ceux décrits par "ATD Positioning based on driver posture and position", MANARY, Reed et Al., SAE TECHNICAL PAPERS, ISSN 0148·7191 et le préambule de la revendication 1, la pression est moins bien répartie antre l'assise et le dossier comme on peut l'être communément entre une chaise et un fauteuil.

### Résumé de l'invention

Un premier but de l'invention est de concevoir une cabine ayant un poste de conduite présentant une position de conduite confortable, une bonne visibilité et un accès aisé. Un deuxième but de l'invention est de mettre au point une cabine dont l'ergonomie du siège permette au conducteur de conduire sans fatigue, avec une concentration optimale tout au long du trajet. Un troisième but de l'invention est de prévoir un véhicule à moteur par exemple industriel équipé d'une cabine dont l'ergonomie a été particulièrement étudiée pour que le conducteur se sente à l'aise.

Une cabine intégrant un poste de conduite, destinée à un véhicule à moteur, comprend un siège pour conducteur ayant une assise et un dossier, un organe de changement de direction, au moins un organe de commande à pédale, et une planche de bord, le conducteur présentant un point talon.

Conformément à un premier aspect de l'invention, la cabine est caractérisée en ce que, lorsque le conducteur est assis en position de conduite sur le siège et lorsque la cabine est à l'horizontale :
- le dossier du siège est incliné vers l'arrière de la cabine et présente un angle sensiblement compris entre 18° et 30° par rapport à la verticale ;
- le siège présente une hauteur, à la verticale, sensiblement comprise entre 300 mm et 400 mm par rapport au point talon ;
- la planche de bord présente une hauteur, à la verticale, au moins au niveau de l'organe de changement de direction, sensiblement comprise entre 500 mm et 600 mm par rapport au point talon.

Autrement dit, avec un dossier orienté vers l'arrière, le conducteur du véhicule va se trouver beaucoup plus à l'aise. Pour effectuer les mesures concernant les différents paramètres concernant les distances et les angles, un mannequin portant la référence SAE Std J826 modélise les caractéristiques morphologiques d'un conducteur installé au poste de conduite et assis sur le siège. Dans tous les cas, par exemple au moment de la livraison du camion, la cabine est apte à présenter les caractéristiques selon l'invention, même lorsque le conducteur ou le mannequin SAE Std J826 ne sont pas assis sur le siège.

Par point talon du conducteur, on entend, un point situé à l'extrémité arrière du talon du conducteur et ainsi du mannequin SAE Std J826 installé sur le siège entrant en contact avec le plancher, lorsque l'avant du pied du conducteur et de ce même mannequin SAE Std J826 est positionné sur l'organe de commande à pédale. Par hauteur du siège, on entend, une hauteur mesurée à la verticale entre le point hanche et le point talon du mannequin SAE Std J826 installé sur le siège. Par hauteur de la planche de bord, on entend une hauteur mesurée à la verticale entre le point talon du mannequin SAE Std J826 installé sur le siège et le dessus de la planche de bord. Cette hauteur spécifique peut être prévue au niveau de l'organe de changement de direction ou pour l'ensemble du poste de conduite.

Dans l'intervalle mentionné ci-dessus, le dossier du siège peut présenter un angle d'inclinaison vers l'arrière très préférentiellement sensiblement égal à 25° par rapport à la verticale. Dans l'intervalle mentionné ci-dessus, le siège peut présenter une hauteur, à la verticale, très préférentiellement sensiblement égale à 350 mm par rapport au point talon. Egalement dans l'intervalle mentionné ci-dessus, la planche de bord peut présenter une hauteur, à la verticale, très préférentiellement sensiblement égale à 550 mm par rapport au point talon.

Par angle d'inclinaison de l'assise on entend, soit un angle mesuré entre la surface supérieure de l'assise et l'horizontale, soit un angle mesuré entre le segment passant par le point hanche et par le point genou du mannequin SAE Std J826 installé sur le siège et l'horizontale. De manière avantageuse, l'assise du siège peut être inclinée vers l'arrière de la cabine. Ainsi, et en tenant compte de l'inclinaison du dossier, cette assise peut avantageusement présenter un angle sensiblement compris entre 10° et 20° par rapport à l'horizontale. Dans l'intervalle mentionné ci-dessus, cet angle peut être préférentiellement sensiblement égal à 15° par rapport à l'horizontale.

Lorsque le conducteur est confortablement installé dans son siège, l'accessibilité à un ou à plusieurs des organes de commande à pédale peut s'avérer moins commode. Le point talon, peut être surélevé. De manière particulièrement favorable, la hauteur du point talon, à la verticale, peut être sensiblement comprise entre 50 mm et 200 mm par rapport au plancher de la cabine. De préférence et dans l'intervalle mentionné ci-dessus, la hauteur du point talon, à la verticale, peut être sensiblement égale à 175 mm par rapport au plancher de la cabine.

A titre d'exemple de réalisation, le poste de conduite peut avantageusement comprendre un deuxième plancher surélevé selon une valeur correspondant à la hauteur du point talon. Dans ce cas, le deuxième plancher aura une hauteur, à la verticale, sensiblement comprise entre 50 mm et 200 mm, et de préférence sensiblement égale à 175 mm, par rapport au premier plancher de la cabine.

A titre d'autre exemple de réalisation, afin de faciliter l'accès au siège, ce dernier peut être monté pivotant par rapport au plancher de la cabine.

Conformément à un deuxième aspect de l'invention, un véhicule à moteur est caractérisé en ce qu'il est équipé d'une cabine telle que décrite ci-dessus, intégrant un poste de conduite.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue latérale d'un camion du type circulant en Europe ;
- la Figure 2 représente une vue latérale d'un camion du type circulant aux Etats-Unis ;
- la Figure 3 représente une vue latérale partielle d'une cabine avec un poste de conduite de type traditionnel ;
- la Figure 4 représente une vue latérale partielle d'une cabine avec un poste de conduite selon un premier mode de réalisation ; et
- la Figure 5 représente une vue latérale partielle d'une cabine avec un poste de conduite selon un deuxième mode de réalisation.

### Description détaillée

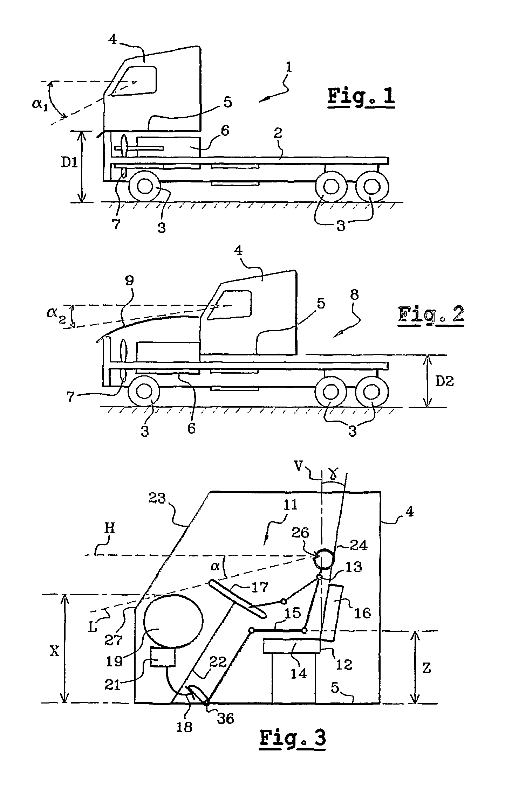

Un véhicule industriel (1), du type circulant en Europe, comprend un châssis (2), des roues (3), une cabine (4), des organes mécaniques dont un moteur (6) et un groupe de refroidissement (7). A titre d'exemple, le véhicule (1), illustré à la Figure 1, est un modèle Magnum® de la Demanderesse. Pour ce type de véhicule (1), la cabine (4) est montée au-dessus des deux roues avant (3), du moteur (6) et du groupe de refroidissement (7) selon une architecture à cabine avancée.

La hauteur (D1), prise à la verticale, entre le plancher (5) de la cabine (4) et le sol est sensiblement comprise entre 1400 mm et 1600 mm, le sol, le véhicule (1), la cabine (4) et le plancher (5) étant sensiblement à l'horizontale. L'angle (α1) correspondant à la visibilité frontale du conducteur est sensiblement compris entre 20° et 30°.

Un véhicule industriel (8), du type circulant aux Etats-Unis, comprend un châssis (2), des roues (3), une cabine (4), des organes mécaniques dont un moteur (6) et un groupe de refroidissement (7). Le véhicule (8), illustré à la Figure 2, est un modèle Vision® de la société Mack. Pour ce type de véhicule (8), la cabine (4) est montée au-dessus des deux roues avant (3), du moteur (6) et du groupe de refroidissement (7) selon une architecture à cabine arrière moteur.

La hauteur (D2), prise à la verticale, entre le plancher (5) de la cabine (4) et le sol est sensiblement comprise entre 1200 mm et 1400 mm, le sol, le véhicule (1), la cabine (4) et le plancher (5) étant sensiblement à l'horizontale. Un capot (9) vient couvrir le moteur (6) et le groupe de refroidissement (7). L'angle (α2) correspondant à la visibilité frontale du conducteur est sensiblement compris entre 12° et 20°. Cet angle de vision (α2) du conducteur est légèrement inférieur pour les véhicules de ce type (8) circulant aux Etats-Unis, en raison de la présence de ce capot avant (9).

La cabine (4) comprend un poste de conduite de type traditionnel (11), représenté en Figure 3. Le poste de conduite traditionnel (11) comprend un siège (12) sur lequel est assis le conducteur. Le conducteur est ici représenté de manière très schématique par référence aux points déterminés d'un mannequin (13), de norme SAE Std J826, installé sur le siège (12). Le siège est en deux parties, une assise (14) et un dossier (16).

Le poste de conduite (11) comprend également un organe de changement de direction, sous la forme d'un volant (17) et au moins un organe de commande à pédale (18), sous la forme d'une pédale, par exemple pédale d'accélération, de freinage, ... Le poste de conduite (11) comprend un tableau de bord (19). Sous le tableau de bord (19) est fixé le mécanisme de transmission (21) de l'organe de commande à pédale (18). Une colonne de direction (22) passe sous le tableau de bord (19) et transmet les rotations du volant (17) aux roues (3) de manière connue en soi. A l'avant, la cabine (4) et le poste de conduite (11) sont délimités par le pare-brise avant (23).

L'angle de vision (α, α1 et α2) du poste de conduite traditionnel (11) est ici défini entre la direction horizontale (H) passant par la tête (24) et plus particulièrement par les yeux (26) du mannequin (13) et la direction orientée vers le bas (L) passant par la tête (24) et plus particulièrement par les yeux (26) du mannequin (13) et limitée par la base (27) du pare-brise (23) et/ou par le tableau de bord (19).

Dans les cabines de type traditionnel (4), la hauteur (X) de la planche de bord (19), qui est définie à la verticale entre la surface supérieure de la planche de bord (19) et le plancher (5) de la cabine (4) dans l'axe du siège (12), est comprise entre 735 mm et 845 mm, les cabines (4) et le plancher (5) étant sensiblement à l'horizontale.

Dans la cabine de type traditionnelle (4), le siège (12) du poste de conduite (11) présente une assise (14) sensiblement horizontale. En d'autres termes, cette assise (14) présente ainsi une surface supérieure qui est sensiblement horizontale. Le mannequin SAE Std J826 (13) installé sur le siège aura ainsi son fémur (15) positionné à l'horizontal.

Cette assise (14) se trouve à une hauteur déterminée par rapport au plancher (5) qui est réglable. Cette hauteur est telle que, le point hanche et/ou le fémur (15) du mannequin SAE Std J826 (13) installé sur le siège se trouvent à une hauteur (Z), prise à la verticale, comprise entre 400 mm et 550 mm par rapport au plancher (5), ce dernier étant sensiblement à l'horizontale. L'angle (γ) du dossier (16) est réglable et varie entre 0° et 25° par rapport à la verticale (V). La valeur utilisée par les conducteurs est en moyenne de 15° par rapport à la verticale (V).

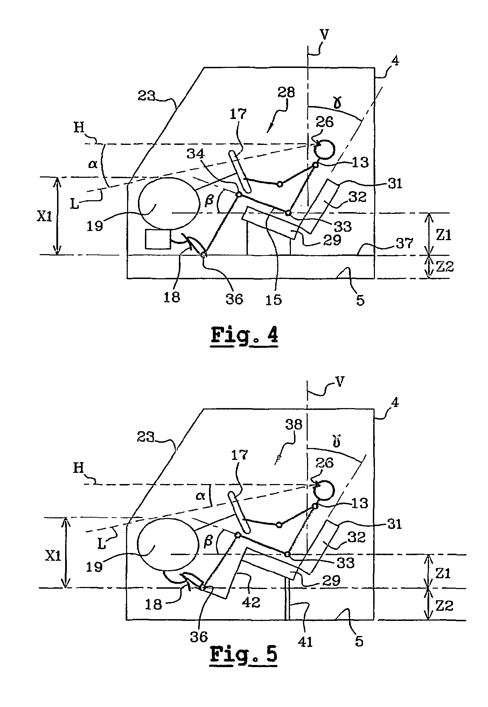

Conformément à l'invention et dans un premier mode de réalisation d'un poste de conduite (28), comme l'illustre la Figure 4, le dossier (32) du siège (31) est incliné vers l'arrière de la cabine (4). L'angle d'inclinaison (γ) du dossier (32) est réglable et varie entre 18° et 30° par rapport à la verticale (V). A titre d'exemple, une valeur de l'angle (γ) pourra être de 25°. Le confort du siège (31) est nettement accru.

L'assise (29) du siège (31) est également inclinée vers l'arrière de la cabine (4) selon un angle (β). L'angle d'inclinaison (β) est ici défini par rapport à l'inclinaison du fémur (15), c'est-à-dire du segment de droite passant par le point hanche (33) et le point genou (34) du mannequin SAE Std J826 (13) installé sur le siège (31), par rapport à l'horizontale, ou par rapport au plancher (5) de la cabine (4). L'assise (29) présente ainsi un angle (β) compris entre 10° et 20°. A titre d'exemple, une valeur de l'angle (β) pourra être de 15°.

La hauteur (Z1) du siège (31) est définie à la verticale entre le point hanche (33) du mannequin SAE Std J826 (13) installé sur le siège (31) et le point talon (36) du mannequin SAE Std J826 (13). La hauteur (Z1) du siège (31) varie ainsi entre 300 mm et 400 mm par rapport à ce point talon (36). Les positions de conduite les mieux appréciées des conducteurs sont telles que leur hanche se trouve à une hauteur (Z1) proche de 300 mm, et non plus à une hauteur (Z) présentant des valeurs de 400 mm à 550 mm dans les cabines de type traditionnelle (4).

En baissant la hauteur du siège (31), il faut pouvoir conserver la même vision rapprochée (même angle α) à travers le pare brise (23) et au dessus de la planche de bord (19). Pour ce faire, dans le premier mode de réalisation, la hauteur (X1) de la planche de bord (19) est comprise entre 500 mm et 600 mm. Cette hauteur (X1) est définie à la verticale entre la surface supérieure de la planche de bord (19) et le point talon (36) du mannequin SAE Std J826 (13) installé dans le siège (31), dans l'axe du siège (31). Cette hauteur (X1) a été réduite d'une valeur sensiblement comprise entre 50 mm et 200 mm, par rapport aux valeurs traditionnellement utilisées de 735 mm à 845 mm. Cette hauteur (X1) n'affecte que le poste de conduite (28) et non la totalité de la planche de bord sur toute la largeur de la cabine (4).

Le point talon (36) du mannequin SAE Std J826 (13) est remonté à la verticale par rapport au plancher (5) de la cabine (4) d'une valeur (Z2) variant entre 50 mm et 200 mm, selon l'amélioration de confort souhaitée. L'organe de commande à pédale (18) est également remonté de la même valeur. En effet, il est techniquement possible de remonter l'organe de commande à pédale (18) d'une valeur variant entre 50 mm et 200 mm, sans remise en cause technique profonde des autres équipements constitutifs de la planche de bord (19), c'est-à-dire appareil de chauffage, distribution d'air, faisceaux électriques....

Pour ce faire, et dans ce premier mode de réalisation, un deuxième plancher (37) a été disposé sur le plancher (5) de la cabine (4). La hauteur (22) du deuxième plancher (37), prise à la verticale, sur lequel repose le point talon (36) du mannequin SAE Std J826 (13), varie entre 50 mm et 200 mm par rapport au plancher (5) de la cabine (4), cette cabine (4), son plancher (5) et le deuxième plancher (37) étant sensiblement à l'horizontale. Cette remontée n'affecte que le poste de conduite (28), mais elle ne touche en aucun cas la partie passager et/ou la partie centrale de la planche de bord (19). La hauteur du siège (31) par rapport au plancher (5) de la cabine (4) reste inchangée.

De plus, ce premier mode de réalisation est tout à fait transposable pour les véhicules circulants aux Etats-Unis (8). La position des yeux (26) du mannequin (13) n'étant pas modifiée par rapport au capot moteur (9), la visibilité vers l'avant (angle α) reste identique.

Cette solution a fait l'objet de deux prototypes sur la base de modèles existant, à savoir les modèles Magnum® de la Demanderesse et Vision® de la société Mack. Un test a été effectué sur un échantillon de quinze chauffeurs expérimentés professionnels roulant sur des parcours variés autoroutiers et périurbains d'environ 300 km. Ce test a été mené par la Demanderesse et par la société Mack Trucks aux Etats-Unis.

Les résultats obtenus lors des tests ont été extrêmement positifs. En effet, il a été reconnu que cette nouvelle position de conduite permet un gain en confort très important par rapport aux véhicules actuels. Une amélioration statistique de trois points sur dix a été perçue sur l'appréciation du confort de conduite.

Conformément à l'invention et dans un deuxième mode de réalisation d'un poste de conduite (38), comme l'illustre la Figure 5, le siège (31) présente la même configuration que celle décrite dans le premier mode de réalisation.

Pour améliorer l'accessibilité au poste de conduite (38), le siège (31) pivote par rapport à un axe (41) situé à proximité de l'intersection de l'assise (29) et du dossier (32), et est équipé d'un repose pied (42). Le repose pied (42) tourne en même temps que le siège (31).

La hauteur (Z1) du siège (31), définie à la verticale entre le point hanche (33) du mannequin SAE Std J826 (13) installé sur le siège (31) et le point talon (36) du mannequin SAE Std J826 (13), est analogue à celle du premier mode de réalisation. La hauteur (X1) de la planche de bord (19), définie. à la verticale entre la surface supérieure de la planche de bord (19) et le point talon (36) du mannequin SAE Std J826 (13) installé dans le siège (31), dans l'axe du siège (31), est analogue à celle du premier mode de réalisation. La hauteur (22) du siège (31), définie à la verticale entre le point talon (36) du mannequin SAE Std J826 (13) installé sur le siège (31) et le plancher (5) de la cabine (4) est analogue à celle du premier mode de réalisation.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Cabine intégrant un poste de conduite (28, 38), destinée à un véhicule à moteur (1, 8), comprenant un siège (31) pour conducteur (13) ayant une assise (29) et un dossier (32), un organe de changement de direction (17), une planche de bord (19) et au moins un organe de commande à pédale (18), le conducteur (13) présentant un point talon (36), et lorsque le conducteur (13) est assis en position de conduite sur le siège (31) et lorsque la cabine (4) est à l'horizontale,
- le dossier (32) du siège (31) est incliné vers l'arrière de la cabine (4) et présente un angle (γ) sensiblement compris entre 18° et 30° par rapport à la verticale (V), et
- le siège (31) présente une hauteur (Z1), à la verticale, sensiblement comprise entre 300 mm et 400 mm par rapport au point talon (36) ;
**caractérisée en ce que**
- le véhicule à moteur (1, 8) est un véhicule industriel routier avec une hauteur entre le plancher (5) et le sol supérieure à 1200 mm, et
- la planche de bord (19) présente une hauteur (X1), à la verticale, au moins au niveau de l'organe de changement de direction (17), sensiblement comprise entre 500 mm et 600 mm par rapport au point talon (36).

2. Cabine selon la revendication 1, **caractérisée en ce que** le dossier (32) du siège (31) présente un angle (γ) de préférence sensiblement égal à 25° par rapport à la verticale (V).

3. Cabine selon la revendication 1 ou 2, **caractérisée en ce que** le siège (31) présente une hauteur (Z1), à la verticale, de préférence sensiblement égale à 350 mm par rapport au point talon (36).

4. Cabine selon l'une des revendications précédentes, **caractérisée en ce que** la planche de bord (19) présente une hauteur (X1), à la verticale, de préférence sensiblement égale à 550 mm par rapport au point talon (36).

5. Cabine selon l'une des revendications précédentes, **caractérisée en ce que** l'assise (29) du siège (31) est inclinée vers l'arrière de la cabine (4) et présente un angle (β) sensiblement compris entre 10° et 20° par rapport à l'horizontale, de préférence sensiblement égal à 15° par rapport à l'horizontale.

6. Cabine selon l'une des revendications précédentes, **caractérisée en ce que** la hauteur (Z2) du point talon (36), à la verticale, est sensiblement comprise entre 50 mm et 200 mm par rapport au plancher (5) de la cabine (4), de préférence sensiblement égale à 175 mm par rapport au plancher (5) de la cabine (4).

7. Cabine selon la revendication 6, **caractérisée en ce que** le poste de conduite (28) comprend un deuxième plancher (37) surélevé d'une valeur correspondant à la hauteur du point talon (36).

8. Cabine selon la revendication 7, **caractérisée en ce que** le siège (31) est monté pivotant par rapport au plancher (5) de la cabine (4).

9. Véhicule à moteur **caractérisé en ce qu'**il est équipé d'une cabine (4) intégrant un poste de conduite (28, 38) selon l'une des revendications précédentes.

## Claims

1. A cab including a driver's cockpit (28, 38) intended for a motor vehicle (1, 8) comprising a seat (31) for the driver (13) having a seat base (29) and a backrest (32), a steering device (17), a dashboard (19) and at least one pedal control (18), the driver (13) having a heel point (36) and when the driver (13) is seated in the driving position on seat (31) and when the cab (4) is horizontal,
- the backrest (32) of the seat (31) slopes towards the back of the cab (4) at an angle (γ) that is substantially 18° to 30° from vertical (V), and
- the seat (31) has a vertical height (Z1) substantially from 300 mm to 400 mm relative to heel point (36);
**characterised in that**
- the motor vehicle (1, 8) is an industrial road vehicle having a height between the floor (5) and the ground that is greater than 1200 mm and
- the dashboard (19) has a vertical height (X1), at least at the level of the steering device (17), substantially 500 mm to 600 mm relative to heel point (36).

2. A cab as claimed in claim 1, **characterised in that** the backrest (32) of seat (31) is at an angle (γ) preferably substantially equal to 25° from vertical (V).

3. A cab as claimed in claim 1 or 2, **characterised in that** the seat (31) has a vertical height (Z1) preferably substantially equal to 350 mm relative to heel point (36).

4. A cab as claimed in one of the above claims, **characterised in that** the dashboard (19) has a vertical height (X1) preferably substantially equal to 550 mm relative to heel point (36).

5. A cab as claimed in any of the above claims, **characterised in that** the seat base (29) of seat (31) slopes towards the back of the cab (4) at an angle (β) of substantially 10° to 20° from horizontal, preferably substantially equal to 15° from horizontal.

6. A cab as claimed in one of the above claims, **characterised in that** the vertical height (Z2) of heel point (36) is substantially 50 mm to 200 mm relative to the floor (5) of cab (4), preferably substantially equal to 175 mm relative to floor (5) of cab (4).

7. A cab as claimed in claim 6, **characterised in that** the driver's cockpit (28) comprises a second floor (37) raised by a value equivalent to the height of heel point (36).

8. A cab as claimed in claim 7, **characterised in that** seat (31) is pivotably mounted relative to the floor (5) of cab (4).

9. A motor vehicle **characterised in that** it is equipped with a cab (4) including a driver's cockpit (28, 38) as claimed in any of the above claims.

## Patentansprüche

1. Kabine mit einem Führerstand (28, 38), die für ein Kraftfahrzeug (1, 8) bestimmt ist, umfassend einen Sitz (31) für den Fahrer (13), der eine Sitzfläche (29) und eine Rückenlehne (32) aufweist, ein Organ zum Fahrtrichtungswechsel (17), ein Armaturenbrett (19) und wenigstens ein Pedal-Betätigungsorgan (18), wobei der Fahrer (13) einen Fersenpunkt (36) aufweist und wobei, wenn der Fahrer (13) in Lenkposition auf dem Sitz (31) sitzt und wenn die sich die Kabine (4) in der Horizontalen befindet,
- die Rückenlehne (32) des Sitzes (31) zum Heck der Kabine (4) geneigt ist und einen Winkel (γ) aufweist, der bezogen auf die Vertikale (V) etwa zwischen 18° und 30° beträgt, und
- der Sitz (31) eine Höhe (Z1) in der Vertikalen aufweist, die bezogen auf den Fersenpunkt (36) etwa zwischen 300 mm und 400 mm beträgt;
**dadurch gekennzeichnet, dass**
- das Kraftfahrzeug (1, 8) ein Straßen-Nutzfahrzeug mit einer Höhe zwischen dem Kabinenboden (5) und dem Erdboden von mehr als 1200 mm ist, und
- das Armaturenbrett (19) wenigstens im Bereich des Fahrtrichtungswechselorgans (17) eine Höhe (X1) in der Vertikalen aufweist, die bezogen auf den Fersenpunkt (36) etwa zwischen 500 mm und 600 mm beträgt.

2. Kabine nach Anspruch 1, **dadurch gekennzeichnet, dass** die Rückenlehne (32) des Sitzes (31) einen Winkel (γ) aufweist, der bezogen auf die Vertikale (V) vorzugsweise etwa 25° beträgt.

3. Kabine nach Anspruch 1 oder 2, **dadurch gekennzeichnet, dass** der Sitz (31) eine Höhe (Z1) in der Vertikalen aufweist, die bezogen auf den Fersenpunkt (36) vorzugsweise etwa 350 mm beträgt.

4. Kabine nach einem der vorhergehenden Ansprüche, **dadurch gekennzeichnet, dass** das Armaturenbrett (19) eine Höhe (X1) in der Vertikalen aufweist, die bezogen auf den Fersenpunkt (36) vorzugsweise etwa 550 mm beträgt.

5. Kabine nach einem der vorhergehenden Ansprüche, **dadurch gekennzeichnet, dass** die Sitzfläche (29) des Sitzes (31) zum Heck der Kabine (4) geneigt ist und einen Winkel (β) aufweist, der bezogen auf die Horizontale etwa zwischen 10° und 20° und vorzugsweise etwa 15° beträgt.

6. Kabine nach einem der vorhergehenden Ansprüche, **dadurch gekennzeichnet, dass** die Höhe (Z2) des Fersenpunktes (36) in der Vertikalen bezogen auf den Boden (5) der Kabine (4) etwa 50 bis 200 mm und vorzugsweise etwa 175 mm bezogen auf den Boden (5) der Kabine (4) beträgt.

7. Kabine nach Anspruch 6, **dadurch gekennzeichnet, dass** der Führerstand (28) einen zweiten Boden (37) umfasst, der um einen Wert erhöht angeordnet ist, welcher der Höhe des Fersenpunktes (36) entspricht.

8. Kabine nach Anspruch 7, **dadurch gekennzeichnet, dass** der Sitz (31) in Bezug auf den Boden (5) der Kabine (4) schwenkbar montiert ist.

9. Kraftfahrzeug, **dadurch gekennzeichnet, dass** es mit einer Kabine (4) mit einem Führerstand (28, 38) nach einem der vorhergehenden Ansprüche ausgestattet ist.
